# EUROPÄISCHE PATENTSCHRIFT

(11) **EP 0 465 719 B1**
(45) Veröffentlichungstag und Bekanntmachung des Hinweises auf die Patenterteilung: **05.02.1997**
(21) Anmeldenummer: 90122578.9
(22) Anmeldetag: 27.11.1990
(51) Int. Cl.: B32B 3/12, B32B 31/04

(54) **Flächiger Gegenstand mit Wabenstruktur und Verfahren zu dessen Herstellung**
Flat product with honeycomb structure and method of production thereof
Produit plat ayant une structure en nid d'abeille et son procédé de fabrication

(30) Priorität: 02.06.1990 DE 4017852
(43) Veröffentlichungstag der Anmeldung: 15.01.1992
(73) Patentinhaber: Eurocopter Deutschland Gesellschaft mit beschränkter Haftung, D-81611 München (DE)
(72) Erfinder: Fiedler, Wolfgang, W-8175 Greiling (DE)
(74) Vertreter: Frick, Gerhard, Dipl.-Ing.

(56) Entgegenhaltungen:
- CH-A- 663 378
- US-A- 4 249 974

## Beschreibung

Die Erfindung betrifft einen Gegenstand gemäß dem Oberbegriff des Patentanspruchs 1 und ein Verfahren zu dessen Herstellung.

Mit einem derartigen Gegenstand als Grundkörper bzw. Kernstück insbesondere zwischen zwei Deckschichten lassen sich bekanntlich z.B. für die Luft- und Raumfahrt Trägerstrukturen von hoher Festigkeit und Steifigkeit bei relativ geringem Gewicht bilden. Allerdings sind der Oberflächenbearbeitung der Wabenstruktur (vor dem Aufbringen der Deckschichten) etwa zum Zwecke der Formgebung enge Grenzen gesetzt. So ist bisher das Abspanen der Wabenstruktur nicht problemlos möglich, weil es an geeigneten Fixiermitteln mangelt. Eine bevorzugte Fixiervorrichtung ist der an eine Evakuiereinrichtung angeschlossene Arbeitstisch (sog. Vakuumtisch), welcher jedoch eine einseitige luftdichte Abdeckung der Wabenstruktur voraussetzt. Dazu kommen bisher klebbare Folien zur Anwendung, die erfahrungsgemäß nach der Bearbeitung der Wabenstruktur nicht ohne unerwünschte Rückstände von Klebmasse von den Zellenwandungen trennbar sind. Auch lassen sich beim Trennen Beschädigungen der Zellenwandungen, wie Risse der Waben, nicht gänzlich ausschließen.

Beispielsweise wird bei einem durch die CH 663 378 bekannten mehrschichtigen flächigen Bauelement der angestrebte mechanische Zusammenhalt einer offenzelligen Kernschicht mit zwei thermoplastischen Deckschichten nicht ohne deren Aufschmelzung erreicht. Während sich der Thermoplast der einzelnen Deckschicht im Schmelzbereich befindet, wird er ohne komplette Umformung oder Verformung der Deckschicht in die offenen Kernzellen eingedrückt. Folglich wird die Verbindung zwischen der Deckschicht und den Zellenwandungen durch Haftwirkung des Thermoplasten bewirkt, d.h. die Verbindungssicherheit ist Stoffschluß, so daß eine Trennung der Deckschicht nicht ohne die Gefahr von Rückständen des Thermoplasten an den Zellenwandungen möglich wäre. Ebenso ist bei einem durch die DE-AS 14 79 279 bekannten Verfahren zum Herstellen von Tiefziehbehältern aus einer mit einem Träger aus steifem Material (Karton, Pappe o. dgl.) verbundenen thermoplastischen Tiefziehfolie ein Verbund derselben nicht ohne eine Schmelzverbindung erreichbar. Vorzugsweise wird für diesen Verbund eine zuvor auf den Träger aufgebrachte Heißsiegelschicht verwendet.

Der Erfindung liegt daher die Aufgabe zugrunde, einen Gegenstand der eingangs genannten Gattung ohne Stoffschluß zwischen der Wabenstruktur und jeweiligen Deckschicht pneumatisch fixierbar auszubilden und hierfür außerdem ein Herstellungsverfahren aufzuzeigen.

Diese Aufgabe ist für einen gattungsgemäßen Gegenstand zum einen Teil mit den kennzeichnenden Merkmalen des Patentanspruchs 1 und zum anderen Teil mit den kennzeichnenden Merkmalen des Patentanspruchs 3 gelöst. Die Erfindung macht sich demnach zur ein- oder auch beidseitigen gasdichten Abdeckung der Wabenzellen den Vorteil einer Deckschicht aus einem Thermoplast zu Nutze, daß diese sich unter bloßer Erweichung durch pneumatischen Druck von der flächenhaft planen Form zu einem dreidimensionalen Gebilde umgestalten läßt, wobei die Wabenzellen (bzw. Zellenwandungen) des Gegenstandes als Formwerkzeug wirksam sind. Da die für diese Umgestaltung nötigen Kräfte relativ gering sind, hat die dreidimensional geformte Deckschicht keinerlei Beschädigungen der Wabenstruktur zur Folge, zumal erforderlichenfalls die Deckschicht durch bloßes Erwärmen auf Erweichungstemperatur und damit ohne besonderen Kraftaufwand von den Zellenwandungen wieder trennbar ist. Dagegen ist durch die gleichmäßig gefäßförmige Verformung der Deckschicht in die einzelne Wabenzelle (nach dem Abkühlen) ein sicherer, dauerhafter Formschluß mit den Zellenwandungen gewährleistet.

Darüber hinaus ist die Erfindung nicht nur zum Zwecke des luftdichten Verschließens von Gegenständen mit Wabenstruktur von Nutzen, sondern erweitert auch noch die Gestaltungsmöglichkeiten insbesondere von Sandwichkörpern mit Wabenkernen ganz beträchtlich. Denn nach den in den Unteransprüchen 2 und 4 gekennzeichneten Weiterbildungen lassen sich erstmals Wabenstrukturen umformen, sofern sie ein warmhärtbares Bindemittel enthalten. Diese Verformungsmöglichkeit, beispielsweise das Gestalten eines halbzylindrischen oder dergleichen gewölbten Formkörpers aus einer planen Wabenplatte ,eröffnet vielfache neue Anwendungen der Wabenstruktur. Dabei kann zudem die Deckschicht, u.U. auch mit einer Faserstoffverstärkung, zugleich die Funktion einer Sandwichdeckschicht übernehmen , also im Verbund mit der Wabenstruktur verbleiben. Es hat sich nämlich gezeigt, daß die dreidimensional verformte Deckschicht die Steifigkeit des betreffenden Verbundkörpers (aus Deckschicht und Wabenstrukturgegenstand) beträchtlich erhöht, was natürlich auch einer spanenden Bearbeitung der Wabenstruktur (saubere Schnitte) oder auch deren Schutz vor Schäden beim Transport bzw. bei der Lagerung u. dgl. zugute kommt. Für Anwendungen in der Raumfahrt, etwa bei Sonnenzellenträgern, ist im übrigen die Einsparung von jeglichem Klebstoff zwischen einer derartigen Deckschicht und den Zellenwandungen ein wesentlicher Gewichtsvorteil.

Nicht zuletzt verdeutlichen die in den Ansprüchen 3 bis 5 gekennzeichneten Verfahrensschritte, daß mit herkömmlicher Fertigungstechnik und relativ geringem Aufwand gearbeitet werden kann und man hierbei nicht unbedingt auf eine manuelle Handhabung der Herstellung des Gegenstandes gemäß der Erfindung angewiesen ist.

Nachfolgend wird die Erfindung anhand eines Ausführungsbeispiels weiter erläutert. Dabei zeigt die Zeichnung in
- Fig. 1: eine perspektivische Ansicht einer mit einer Deckschicht zu vereinigenden Wabenplatte;
- Fig. 2: die Deckschicht und Wabenplatte gemäß Fig. 1 im Verbund;
- Fig. 3: einen Querschnitt durch den Verbund gemäß Fig. 2;
- Fig. 4: den Verbund aus Deckschicht und Wabenplatte gemäß Fig. 2 und 3 mit einer damit zu vereinigenden weiteren Deckschicht;
- Fig. 5: die Wabenplatte und beiden Deckschichten gemäß Fig. 4 im Verbund;
- Fig. 6: eine perspektivische Ansicht einer über einer gewölbten Formfläche mit einer Deckschicht zu verformenden Wabenplatte.
- Fig. 7: die Wabenplatte und Deckschicht gemäß Fig. 6 im verformten Verbund .

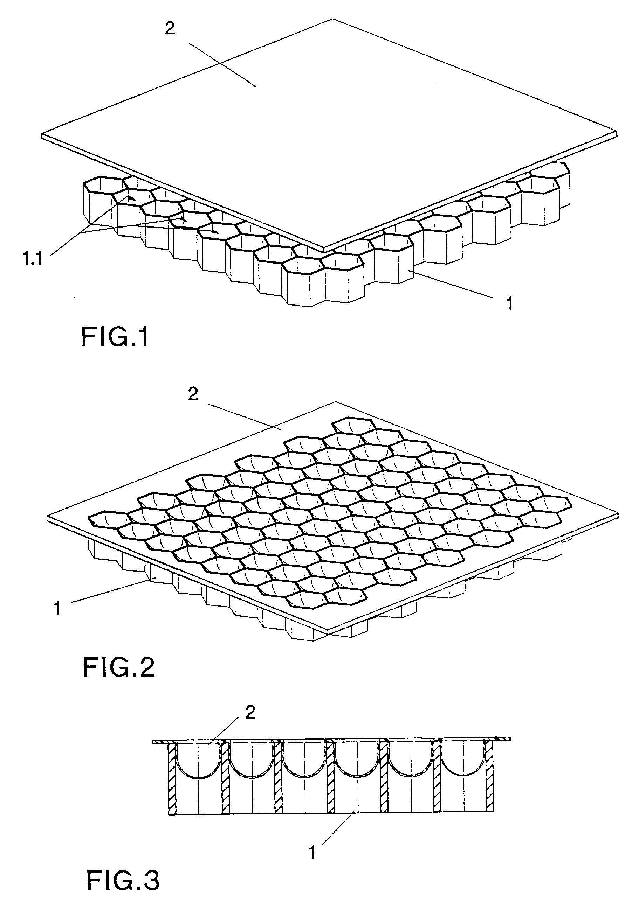

Eine Wabenplatte 1 beispielsweise aus Aluminium soll auf einem (nicht dargestellten) mit einer Vakuumeinrichtung versehenen Arbeitstisch zur formgebenden Bearbeitung (durch Spanen o. dgl.) pneumatisch fixiert werden können, weshalb die Wabenzellen 1.1 einseitig mit einer Deckschicht relativ gasdicht geschlossen werden müssen. Gemäß Fig. 1 ist daher diese Deckschicht eine Platte 2 aus einem Thermoplast, vorzugsweise Polystyrol, bei welchem Kunststoff mit einer Formrückstellfähigkeit nach einer Warmverformung gerechnet werden kann. Die thermoplastische Platte 2 kann ein Zuschnitt aus von einer Rolle abwickelbarem Folienmaterial z.B. mit einer Dicke von Bruchteilen eines Millimeters sein. Zur Herstellung des Verbundes der Wabenplatte 1 bzw. ihrer Zellenwandung mit der thermoplastischen Platte 2 wird diese zunächst durch Erwärmen z.B. mittels eines Strahlungsheizkörpers auf etwa 120°C erweicht. Dabei kann die Wabenplatte 1 im Arbeitstisch versenkt sein, um ihre Erwärmung auszuschließen. Im erweichten Zustand wird erforderlichenfalls die thermoplastische Platte 2 noch gedehnt, z.B. durch kurzzeitige Zufuhr von Blasluft (Sekundenbruchteile), und dann mit der Wabenplatte 1 zur Deckung gebracht. Hiernach wird mittels am Arbeitstisch erzeugtem Unterdruck die erweichte Platte 2 infolge zellenseitig einwirkendem Saugdruck in die Wabenzellen 1.1 jeweils gefäßförmig eingezogen bis zu der in Fig. 2, 3 dargestellten Umgestaltung, worauf die verformte Platte 2 durch Kühlmittelzufuhr , z.B. Blasluft, wieder auf Raumtemperaur abgekühlt wird; solange muß selbstverständlich der Saugdruck nicht aufrechterhalten werden. Damit ist ein dauerhafter Formschluß der thermoplastischen Platte 2 mit der Wabenplatte 1 hergestellt, so daß diese durch Saugdruck auf die (dann auf dem Arbeitstisch zu positionierende) Platte 2 sicher fixierbar ist zur weiteren Bearbeitung der Wabenplatte 1 an ihrer unbedeckten Oberfläche.

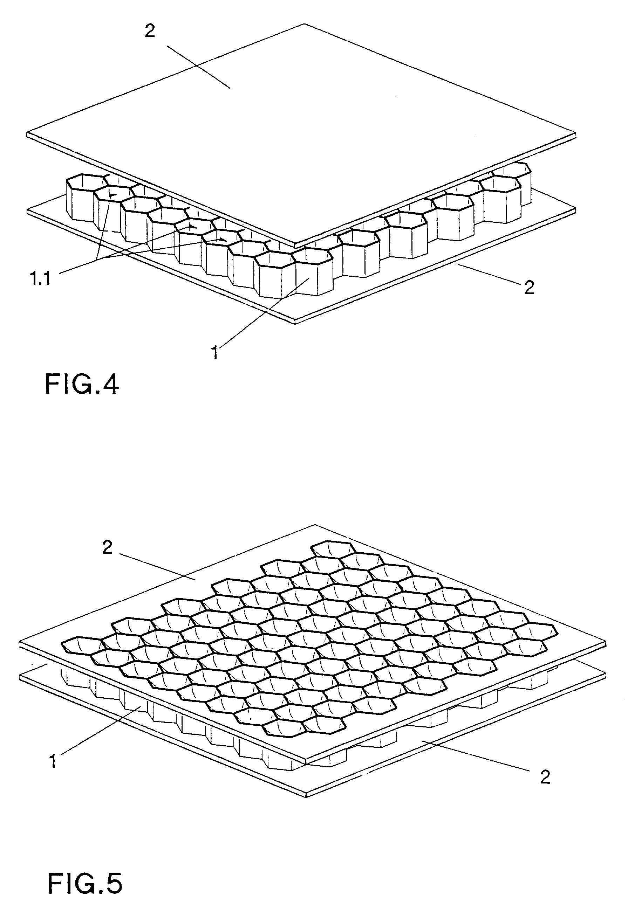

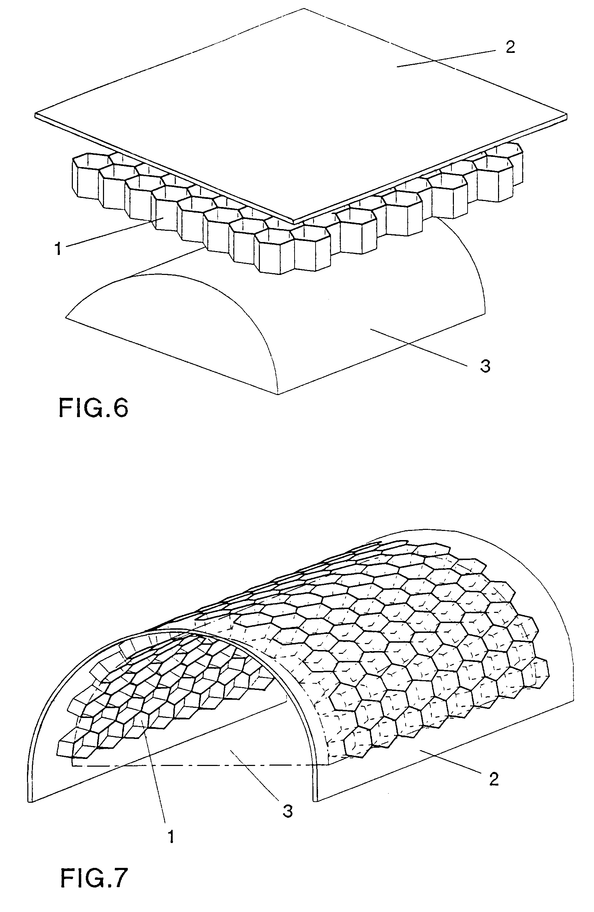

Bei der Herstellung des Verbundes der Wabenplatte 1 mit der thermoplastischen Platte 2 kann diese im erweichten Zustand anstelle von Saugdruck bzw. Unterdruck auch durch Pressdruck pneumatisch verformt werden. Eine derartige Umgestaltung infolge auf der der Zellenseite abgewandten Fläche der Platte 2 einwirkendem Überdruck ist vor allem dann zweckmäßig, wenn die Wabenplatte 1 gemäß Fig. 4 und 5 mit einer zweiten Platte 2 verbunden, also beidseitig beschichtet werden soll, etwa um ein Sandwichbauteil mit den beiden Platten 2 als Deckschichten der dann als Wabenkern fungierenden Wabenplatte 1 zu erhalten; hierbei können die Platten 2 auch einen Faserstoff als Verstärkung enthalten, z.B. Glas- oder Kohlefasern mit dem Thermoplast als Matrix.

Soweit dagegen die Platte 2 nur ein Mittel zur Fixierung der Wabenplatte 1 auf einem Arbeitstisch sein soll, braucht nach deren formgebender Bearbeitung, sobald also die Wabenplatte 1 von der thermoplastischen Platte 2 zu befreien ist, diese lediglich auf ihre Erweichungstemperatur erwärmt zu werden. Infolge der dann wirksamen Formrückstellung der Platte 2 wird der Formschlußverbund mit der Wabenplatte 1 ohne Rückstände von thermoplastischem Kunststoff gelöst; die Platte 2 ist leicht abziehbar.

Wie eingangs bereits erwähnt, eröffnet eine in der vorbeschriebenen Weise mit der thermoplastischen Platte 2 hergestellte einseitige Abdeckung der Wabenzellen 1.1 auch eine Gestalungsmöglichkeit für die Wabenplatte 1 mittels einer Formfläche 3. So kann gemäß Fig. 6, 7 eine Wabenplatte 1 ohne weiteres zu einem halbzylindrischen Gegenstand gebogen werden. Voraussetzung hierfür ist lediglich ein Wabenmaterial, welches mit einem warmhärtbaren Kunststoff versehen ist, dessen Aushärtetemperatur geringer ist als die Erweichungstemperatur der thermoplastischen Platte 2. Mit einer Platte 2 z.B. aus Polyethersulfon, also einer Erweichungstemperatur von 200°C trifft dies z.B. für die sog. Nomex-Wabe zu, welche aus mit Phenolharz getränktem Wachspapier aufgebaut ist und folglich bei ca. 165°C aushärtet. In diesem Fall wird gemäß Fig. 6 die Wabenplatte 1 vor dem Aushärten ihrer Harzmatrix über der halbzylindrisch gewölbten (Positiv-)Formfläche 3 positioniert und mit der sie andererseits bedeckenden, thermisch erweichten Platte 2 durch über die entsprechend durchlässige Formfläche 3 und die Wabenzellen 1.1 auf die Platte 2 einwirkenden Saugdruck dem Profil der Formfläche 3 entsprechend verformt. Wie Fig. 7 zeigt, wird die Platte 2 ebenfalls in der vorbeschriebenen Weise durch den Saugdruck in die Wabenzellen 1.1 eingezogen. Selbstverständlich ist dieser Verformungs- bzw. Formumgestaltungsvorgang auch mittels atmosphärischem Überdruck durchführbar. Erst wenn hiernach die Platte 2 wieder auf Raumtemperatur abgekühlt ist, sich also nicht mehr in erweichtem Zustand befindet, wird schließlich die Wabenplatte 1 bzw. deren Bindemittel ausgehärtet, etwa über einen Zeitraum von einigen Stunden. Die Wabenplatte 1 kann schließlich wieder nach einem erneuten Erwärmen der verformten thermoplastischen Platte 2 auf Erweichungstemperatur hiervon getrennt werden.

## Patentansprüche

1. Flächiger Gegenstand mit Wabenstruktur, wie Wabenkern für Schicht- bzw. Sandwichkörper, dessen Wabenzellen wenigstens einseitig durch eine Deckschicht (Platte 2) aus thermoplastischem Kunststoff in Form einer Platte oder Folie geschlossen sind, **dadurch gekennzeichnet,** daß die Deckschicht (Platte 2) durch eine im erweichten Zustand mittels (pneumatischem) Unter- oder Überdruck bewirkte dreidimensionale gefäßförmige Umformung in jede einzelne Wabenzelle (1.1) mit den Zellenwandungen in einem bloßen Formschlußverbund steht und die Deckschicht (Platte 2) formrückstellfähig ist.

2. Gegenstand nach Anspruch 1, mit einer einen warmhärtbaren Kunststoff enthaltenden Wabenstruktur, **dadurch gekennzeichnet,** daß die Deckschicht ( Platte 2) aus einem Kunststoff besteht, welcher bei einer höheren Temperatur als die Aushärtetemperatur der Wabenstruktur erweicht.

3. Verfahren zum Herstellen eines Gegenstandes nach Anspruch 1, **dadurch gekennzeichnet,** daß die Wabenzellen (1.1) einseitig mit der durch Erwärmen erweichten Deckschicht (Platte 2) abgedeckt werden, dann diese in ihrem erweichten Zustand infolge entweder eines zellenseitig wirkenden Saugdruckes oder eines andererseits pneumatisch aufgebrachten Pressdruckes in die Wabenzellen (1.1) jeweils gefäßförmig eingezogen bzw. eingedrückt wird und nach dieser Umgestaltung die Deckschicht (Platte 2) durch Kühlmittelzufuhr wieder auf Raumtemperatur gebracht wird.

4. Verfahren nach Anspruch 3 für einen Gegenstand nach Anspruch 1 und 2, **dadurch gekennzeichnet,** daß der Gegenstand (Wabenplatte 1) einerseits über einer profilierten Formfläche (3) positioniert und mit der ihn andererseits bedeckenden erweichten Deckschicht (Platte 2) durch den Saug- oder Pressdruck dermaßen beaufschlagt wird, daß der Gegenstand (Wabenplatte 1) mit der Deckschicht (Platte 2) der Formfläche (3) entsprechend verformt und zugleich die Deckschicht (Platte 2) in die Wabenzellen (1.1) eingezogen bzw. eingedrückt wird, und daß der Gegenstand (Wabenplatte 1) bzw. der Kunststoff seiner Wabenstruktur ausgehärtet wird, sobald die Deckschicht (Platte 2) wieder auf Raumtemperatur gebracht ist.

5. Verfahren nach Anspruch 3 oder 4, **dadurch gekennzeichnet,** daß die erweichte Deckschicht (Platte 2) vor der Druckbeaufschlagung gedehnt wird.

## Claims

1. Flat object with a honeycomb structure, such as a honeycomb core for layered or sandwiched bodies, the honeycomb cells of which are at least on one side sealed by a covering layer (plate 2) of thermoplastic material in the shape of a plate or foil, **characterised in that** the covering layer (plate 2) is, by means of three-dimensional vessel-shaped reshaping achieved by a (pneumatic) negative or positive pressure whilst in a softened state in each individual honeycomb cell (1.1), positively joined to the cell walls, and the covering layer (plate 2) can be returned to its previous shape.

2. Object according to Claim 1 comprising a honeycomb structure containing a heat-hardening plastic material, **characterised in that** the covering layer (plate 2) is made of a plastic material which softens at a temperature above that of the hardening temperature.

3. Process for manufacturing an object according to Claim 1, **characterised in that** the honeycomb cells (1.1) are on one side covered with the covering layer (plate 2) which has been softened by heating, and thereafter these are in their softened state like vessels drawn or pushed into the honeycomb cells (1.1) due to either a negative pressure operative at the side of the cells or a pneumatic positive pressure applied on the other side, and after this reshaping the covering layer (plate 2) is returned to ambient temperature by way of supplying a refrigerant.

4. Process according to Claim 3 for an object according to Claim 1 and 2, **characterised in that** the object (honeycomb plate 1) is on the one side positioned over a profiled shape (3) and loaded by the negative or positive pressure with the softened covering layer (plate 2), which covers it on the other side, in such a manner that the object (honeycomb plate 1) is respectively reshaped with the covering layer (plate 2) of the profiled shape (3) and at the same time the covering layer (plate 2) is drawn or pushed into the honeycomb cells (1.1), and the object (honeycomb plate 1) or the plastic material of its honeycomb structure is hardened as soon as the covering layer (plate 2) has been returned to ambient temperature.

5. Process according to Claim 3 or 4, **characterised in that** the softened covering layer (plate 2) is expanded prior to application of pressure.

## Revendications

1. Objet plan à structure en nid d'abeille, tel que coeur en nid d'abeille pour un élément multiplis ou un élément sandwich, dont les cellules de nid d'abeille sont fermées d'un côté au moins par une couche de couverture (plaque 2) en un matériau synthétique thermoplastique, en forme de plaque ou de film, caractérisé par le fait que la couche de couverture (plaque 2), dans chaque cellule (1.1) de nid d'abeille, est liée par simple complémentarité de forme aux parois de cellule par une déformation tri-dimensionnelle en forme de pot provoquée, à l'état ramolli, par une pression (pneumatique) négative ou positive, et que la couche de couverture (plaque 2) présente une capacité à reprendre sa forme.

2. Objet selon la revendication 1, avec une structure en nid d'abeille contenant un matériau synthétique thermodurcissable, caractérisé par le fait que la couche de couverture (plaque 2) est en un matériau synthétique qui ramollit à une température supérieure à la température de durcissement de la structure en nid d'abeille.

3. Procédé pour la fabrication d'un objet selon la revendication 1, caractérisé par le fait que l'on couvre les cellules (1.1) de nid d'abeille d'un seul côté avec la couche de couverture (plaque 2) ramollie par chauffage, que l'on donne à ladite couche de couverture, à l'état ramolli, une forme de pot rentrant dans les cellules (1.1) de nid d'abeille, soit par une dépression agissant côté cellule, soit par une pression d'emboutissage pneumatique appliquée de l'autre côté , et qu'après mise en forme on ramène la couche de couverture (plaque 2) à la température ambiante par apport de fluide de refroidissement.

4. Procédé selon la revendication 3 pour un objet selon la revendication 1, caractérisé par le fait que l'on place l'objet (plaque à nid d'abeille 1) avec l'une de ses faces sur une surface de moule (3) profilée et on applique sur celle-ci et sur la couche de couverture (plaque 2) ramollie couvrant son autre face une pression négative ou une pression positive telle, que l'objet (plaque à nid d'abeille 1) avec la couche de couverture (plaque 2) soit mis en forme conformément à la surface du moule (3) et que simultanément, la couche de couverture (plaque 2) rentre dans les cellules (1;1) de nid d'abeille et par le fait que l'on durcit l'objet (plaque à nid d'abeille 1) ou le matériau synthétique de sa structure en nid d'abeille dès que la couche de couverture (plaque 2) a été ramenée à la température ambiante.

5. Procédé selon la revendication 3 ou 4, caractérisé par le fait que l'on étire la couche de couverture (plaque 2) ramollie avant de lui appliquer la pression.
